# EUROPEAN PATENT SPECIFICATION

(11) **EP 4 117 133 B1**
(45) Date of publication and mention of the grant of the patent: **03.04.2024**
(21) Application number: 22180612.8
(22) Date of filing: 23.06.2022
(51) Int. Cl.: H02J 3/00, H02J 13/00

(54) **AN ARRANGEMENT FOR SIGNAL TRANSMISSION BETWEEN A PLURALITY OF ELECTRICAL UNITS OF A DAISY CHAIN**
ANORDNUNG ZUR SIGNALÜBERTRAGUNG ZWISCHEN EINER MEHRZAHL VON ELEKTRISCHEN EINHEITEN EINER DAISY CHAIN
AGENCEMENT POUR LA TRANSMISSION DE SIGNAUX ENTRE UNE PLURALITÉ D'UNITÉS ÉLECTRIQUES D'UNE GUIRLANDE

(30) Priority: 06.07.2021 SE 2150883
(43) Date of publication of application: 11.01.2023
(73) Proprietor: Scania CV AB, 151 87 Södertälje (SE)
(72) Inventor: GUPTA, Sandeep, 151 32 Södertälje (SE)
(74) Representative: Scania CV AB

(56) References cited:
- EP-A1- 1 059 706
- EP-A1- 1 696 519
- EP-A1- 2 869 091
- US-A1- 2017 356 243

## Description

### Technical field

Aspects of the present invention relate to a vehicle arrangement for signal transmission between a plurality of electrical units of a daisy chain. Further, aspects of the present invention relate to a method for a process of fault detection in a vehicle arrangement comprising a plurality of electrical units and one or more signal wires interconnecting the electrical units of the plurality of electrical units to form a daisy chain.

### Background

Electrical units, such as electric lights or control units, may be interconnected to form a daisy chain, i.e. the electrical units are connected together in sequence or in a ring, such as connected in series, for example similar to a garland of daisy flowers. A daisy chain may be used for electric power signals, communication signals, or a combination thereof.

US2017356243 describe a control system comprising an intelligent hub for shade control providing a signal or power to a number of nodes in a daisy-chain network.

EP2869091 describe a streamer towed by a vessel and a method of sensing a fault condition in an interconnection between two network units being towed by the vessel.

### Summary

The inventor of the present invention has found drawbacks in conventional solutions for connecting electrical units to form a daisy chain. For example, the inventor of the present invention has found it to be difficult to detect a fault, such as the location of the fault, in faulty conventional daisy chains including a plurality of electric units.

An object of the invention is to provide a solution which mitigates or solves the drawbacks and problems of conventional solutions.

The above and further objects are solved by the subject matter of the independent claims which define the invention.

Further advantageous embodiments of the invention can be found in the dependent claims. The embodiments hereafter are not necessarily including all the claimed essential features that define the invention.

According to a first aspect of the invention, the above mentioned and other objects are achieved with a vehicle arrangement for signal transmission between a plurality of electrical units of a daisy chain,
wherein the arrangement comprises a plurality of electrical units,
wherein the arrangement comprises one or more signal wires for interconnecting the electrical units of the plurality of electrical units to form a daisy chain,
wherein the arrangement comprises one or more interfaces for providing a signal connection between two electrical units of the plurality of electrical units,
wherein the one or more interfaces comprise one or more connectors,
wherein the one or more connectors are connected to a signal wire of the one or more signal wires,
wherein the one or more interfaces are external to the electrical units of the plurality of electrical units, and
wherein the one or more connectors are connectable to a device configured to monitor signal transmission, or signaling, between two electrical units of the plurality of electrical units.

An advantage of the arrangement according to the first aspect is that fault detection in a daisy chain including a plurality of interconnected electrical units is improved and made more efficient, since a device configured to monitor signal transmission is connectable to the connector which is external to, i.e. located outside, the electrical units of the plurality of electrical units. Since the interface, which includes the connector, is external to the electrical units, also the connector is external to the electrical units. When the connector is external to the electrical units and thus not part of any one of the electrical units, it is easier and more efficient to detect, or identify, the location of a fault in the daisy chain. For example, a first sequence, or part, of the daisy chain may be isolated and subjected to fault detection, and subsequently a second sequence, or part, of the daisy chain may be isolated and subjected to fault detection, and so on. Thus, the location of a fault in the daisy chain is detected in a more efficient and easier manner. Further, there is no need to discard of a faulty daisy chain, since the location of the fault be identified, and the fault may be addressed and corrected or rectified.

An advantage of the arrangement according to the first aspect is that the efficiency of the interconnection of the electrical units and/or the efficiency of the daisy chain is/are improved. By way of the connector being external to the electrical units, the fault detection is made more flexible. For example, there is no need to cut a signal wire for the connection of a device configured to monitor signal transmission, and there is no need to dismantle one or more electrical units for the connection of a device configured to monitor signal transmission.

It is to be understood that a plurality of electrical units comprises two or more electrical units. For some embodiments, the connector may be referred to as a signal connector. For some embodiments, the connector may comprise an electrical connector. For some embodiments, the signal wire may comprise an electrical wire.

Each electrical unit of the plurality of electrical units may comprise any one of the group of:
- an electrical system, such as a control system, or a communication system, for example a message-based communication system, such as a controller area network, CAN, protocol communication system, a local interconnect network, LIN, communication system, or an Ethernet communication system;
- a control unit, for example an electronic control unit, ECU;
- a physical unit including one or more computer programs comprising instructions which, when the program is executed by a computer, cause the computer to carry out a method or one or more steps of a procedure or process;
- one or more computer-readable mediums comprising software and/or instructions which, when the instructions are executed by a computer, cause the computer to carry out a method or one or more steps of a procedure or process;
- an electrical apparatus or an electrical device;
- an electric light, for example a lamp;
- a loudspeaker;
- a fan;
- a sensor, for example a pressure sensor, a temperature sensor, a vibration sensor, a velocity sensor, a flow sensor, or a position sensor etc.; and
- an electric power source or an electrical energy source.

Other electrical units in additional to the electrical units mentioned above are also possible.

The arrangement comprises a plurality of signal wires for interconnecting the electrical units of the plurality of electrical units to form a daisy chain,
wherein the interface comprises two or more connectors,
wherein the connector is connected to one or more signal wires of the plurality of signal wires, and
wherein two connectors of the two or more connectors of the interface are detachably connectable to one another so as to provide a signal connection between two signal wires of the plurality of signal wires for providing a signal connection between two electrical units of the plurality of electrical units.

An advantage of this is that fault detection in a daisy chain including a plurality of interconnected electrical units is further improved and made even more efficient, since a first sequence, or part, of the daisy chain may be easily disconnected, isolated and subjected to fault detection, and then a second sequence, or part, of the daisy chain may be easily disconnected, isolated and subjected to fault detection, and so on. Thus, the location of a fault in the daisy chain is detected in an even more efficient and even easier manner. Further, there is no need to dispose of a faulty daisy chain, since the faulty sequence, or section, of the daisy chain can be easily replaced, and a new flawless sequence may be connected instead. An advantage of this is that a more flexible interconnection of electrical units is attained. An advantage of this is that the flexibility of the daisy chain is improved. Further, the flexibility of the interconnection of electrical units is also improved because of the modular concept of using two or more connectors, since additional sequences can be added and connected when required or desired, for example when additional electrical units are to be subsequently installed or connected at a later stage. Thus, the number of connectors can be adapted to the number of electrical units to be connected in a modular manner. Thus, as a consequence, the overall cost for the electrical installation may be reduced. For some embodiments, the modular concept in this context may be understood as using a plurality of standardized connectors for flexibility and variety in use. An advantage of this is that the efficiency of the interconnection of the electrical units is further improved in an optimal manner. It is to be understood that a plurality of signal wires comprises two or more signal wires.

According to a further advantageous embodiment of the arrangement according to the first aspect, two connectors of a first group of connectors of the two or more connectors of the interface are detachably connectable to one another so as to provide a signal connection between two signal wires of a first group of signal wires of the plurality of signal wires for providing a signal connection between two electrical units of the plurality of electrical units. The first group of signal wires may be part of, or represent, a first signal line, which, for example, may transmit one or more first signals, for example an electric power signal, an electrical ground signal, or a communication signal.

According to another advantageous embodiment of the arrangement according to the first aspect, the two connectors of the first group of connectors are detachably connectable to one another so as to provide a signal connection between two signal wires of a second group of signal wires of the plurality of signal wires for providing a signal connection between two electrical units of the plurality of electrical units. The second group of signal wires may be part of, or represent, a second signal line, which, for example, may transmit one or more second signals, for example different from the one or more first signals, for example an electric power signal, an electrical ground signal, or a communication signal. An advantage of this embodiment is that the signal transmission between a plurality of electrical units of a daisy chain is improved. An advantage of this embodiment is that the efficiency of the interconnection of the electrical units is further improved. An advantage of this embodiment is that the flexibility of the interconnection of the electrical units is further improved.

According to yet another advantageous embodiment of the arrangement according to the first aspect, the two connectors of the first group of connectors are detachably connectable to one another so as to provide a signal connection between two signal wires of a third group of signal wires of the plurality of signal wires for providing a signal connection between two electrical units of the plurality of electrical units. The third group of signal wires may be part of, or represent, a third signal line, which, for example, may transmit one or more third signals, for example different from the one or more first and second signals, for example an electric power signal, an electrical ground signal, or a communication signal. An advantage of this embodiment is that the signal transmission between a plurality of electrical units of a daisy chain is further improved. An advantage of this embodiment is that the efficiency of the interconnection of the electrical units is further improved. An advantage of this embodiment is that the flexibility of the interconnection of the electrical units is further improved.

According to still another advantageous embodiment of the arrangement according to the first aspect, connectors of a second group of connectors of the two or more connectors of the interface are detachably connectable to one another so as to provide a signal connection between two signal wires of a second group of signal wires of the plurality of signal wires for providing a signal connection between two electrical units of the plurality of electrical units. The second group of connectors may be part of a second signal line, which, for example, may transmit one or more second signals, for example different from the one or more first signals, for example an electric power signal, an electrical ground signal, or a communication signal. An advantage of this embodiment is that the signal transmission between a plurality of electrical units of a daisy chain is further improved. An advantage of this embodiment is that the efficiency of the interconnection of the electrical units is further improved. An advantage of this embodiment is that the flexibility of the interconnection of the electrical units is further improved.

According to an advantageous embodiment of the arrangement according to the first aspect, two connectors of a third group of connectors of the two or more connectors of the interface are detachably connectable to one another so as to provide a signal connection between two signal wires of a third group of signal wires of the plurality of signal wires for providing a signal connection between two electrical units of the plurality of electrical units. The third group of connectors may be part of a third signal line, which, for example, may transmit one or more third signals, for example different from the one or more first and second signals, for example an electric power signal, an electrical ground signal, or a communication signal. An advantage of this embodiment is that the signal transmission between a plurality of electrical units of a daisy chain is further improved. An advantage of this embodiment is that the efficiency of the interconnection of the electrical units is further improved. An advantage of this embodiment is that the flexibility of the interconnection of the electrical units is further improved.

According to a further advantageous embodiment of the arrangement according to the first aspect, the two connectors detachably connectable to one another so as to provide a signal connection between signal wires of the plurality of signal wires are directly detachably connectable to one another. An advantage of this embodiment is that the efficiency of the interconnection of the electrical units is further improved. An advantage of this embodiment is that the flexibility of the interconnection of the electrical units is further improved.

According to another advantageous embodiment of the arrangement according to the first aspect, the two connectors detachably connectable to one another so as to provide a signal connection between signal wires of the plurality of signal wires comprise one or more female receptacles and one or more male receptacles. An advantage of this embodiment is that the efficiency of the interconnection of the electrical units is further improved. An advantage of this embodiment is that the flexibility of the interconnection of the electrical units is further improved.

According to yet another advantageous embodiment of the arrangement according to the first aspect, the arrangement comprises a plurality of signal cables for interconnecting the electrical units of the plurality of electrical units to form the daisy chain,
wherein each signal cable of the plurality of signal cables comprises one or more signal wires of the plurality of signal wires, and
wherein the connector is connected to one or more signal cables of the plurality of signal cables.

An advantage of this embodiment is that the signal transmission between a plurality of electrical units of a daisy chain is further improved. An advantage of this embodiment is that the efficiency of the interconnection of the electrical units is further improved. An advantage of this embodiment is that the flexibility of the interconnection of the electrical units is further improved.

According to still another advantageous embodiment of the arrangement according to the first aspect, the connector comprises one or more wire-to-wire connector units. An advantage of this embodiment is that the signal transmission between a plurality of electrical units of a daisy chain is further improved. An advantage of this embodiment is that the efficiency of the interconnection of the electrical units is further improved. An advantage of this embodiment is that the flexibility of the interconnection of the electrical units is further improved.

According to an advantageous embodiment of the arrangement according to the first aspect, the one or more interfaces is/are configured to provide one or more signal connections between every two electrical units of the plurality of electrical units. An advantage of this embodiment is that fault detection in a daisy chain including a plurality of interconnected electrical units is further improved and made even more efficient, since more sequences of the daisy chain may be isolated and individually subjected to fault detection. Thus, the location of a fault in the daisy chain is detected in an even more efficient and even easier manner. An advantage of this embodiment is that the efficiency of the interconnection of the electrical units is further improved. An advantage of this embodiment is that the flexibility of the interconnection of the electrical units is further improved.

According to a further advantageous embodiment of the arrangement according to the first aspect, the arrangement comprises three or more electrical units included in the plurality of electrical units.

According to another advantageous embodiment of the arrangement according to the first aspect, the signal wire is configured to transmit one or more signals comprising one or more of the group of:
- an electric power signal;
- an electrical ground signal;
- a communication system signal; and
- a message-based communication system signal.

Thus, for example, the one or more transmitted signals may be applied to provide electric power to the electrical units, to transmit information and/or data to the electrical units and/or to receive information and/or data from the electrical units.

According to a second aspect of the invention, the above mentioned and other objects are achieved with a method for a process of fault detection in an arrangement comprising a plurality of electrical units and one or more signal wires interconnecting the electrical units of the plurality of electrical units to form a daisy chain,
wherein the plurality of electrical units is daisy-chained by way of one or more interfaces configured to provide a signal connection between two electrical units of the plurality of electrical units,
wherein the one or more interfaces comprise one or more connectors,
wherein the one or more connectors are connected a signal wire of the one or more of signal wires,
wherein the one or more interfaces are external to the electrical units of the plurality of electrical units, wherein the method comprises:
   connecting the one or more connectors to a device for monitoring signal transmission between two electrical units of the plurality of electrical units.

Advantages of the method according to the second aspect correspond to advantages of the arrangement according to the first aspect and its embodiments mentioned above or below and are thus not repeated here.

Advantages of the below-mentioned embodiments of the method according to the second aspect correspond to advantages of the embodiments of the arrangement according to the first aspect mentioned above or below and are thus not repeated hereinbelow.

The arrangement comprises a plurality of signal wires interconnecting the electrical units of the plurality of electrical units to form a daisy chain,
wherein the interface comprises two or more connectors,
wherein the connector is connected to one or more signal wires of the plurality of signal wires, and
wherein two connectors of the two or more connectors of the interface are detachably connectable to one another so as to provide a signal connection between two signal wires of the plurality of signal wires for providing a signal connection between two electrical units of the plurality of electrical units, wherein the method comprises:
   - disconnecting two connectors of one of the two or more interfaces and disconnecting two connectors of another one of the two or more interfaces; and
   - feeding one or more signals to one of the two or more interfaces having disconnected connectors, wherein the method further comprises:
   - if no signal is detected at the other one of the two or more interfaces having disconnected connectors, determining that a fault is located between the two interfaces having disconnected connectors, or the method further comprises:
   - if a signal is detected at the other one of the two or more interfaces having disconnected connectors, determining that no fault is located between the two interfaces having disconnected connectors and that a fault is located elsewhere in the arrangement.

According to an advantageous embodiment of the method according to the second aspect, the plurality of electrical units is daisy-chained by way of two or more interfaces configured to provide a signal connection between two electrical units of the plurality of electrical units, wherein the method comprises:
- feeding one or more signals to one of the two or more interfaces, wherein the method further comprises:
- if no signal is detected at the other one of the two or more interfaces by way of the device, determining that a fault is located between the two interfaces, or the method further comprises:
- if a signal is detected at the other one of the two or more interfaces by way of the device, determining that no fault is located between the two interfaces and that a fault is located elsewhere in the arrangement.

According to another advantageous embodiment of the method according to the second aspect, two connectors of a first group of connectors of the two or more connectors of the interface are detachably connectable to one another so as to provide a signal connection between two signal wires of a first group of signal wires of the plurality of signal wires for providing a signal connection between two electrical units of the plurality of electrical units, wherein the method comprises:
- disconnecting two connectors of the first group of connectors of one of the two or more interfaces and disconnecting two connectors of the first group of connectors of another one of the two or more interfaces; and
- feeding one or more signals to one of the two or more interfaces having disconnected connectors of the first group of connectors, wherein the method further comprises:
- if no signal is detected at the other one of the two or more interfaces having disconnected connectors of the first group of connectors, determining that a fault is located between the two interfaces having disconnected connectors of the first group of connectors, or the method further comprises:
- if a signal is detected at the other one of the two or more interfaces having disconnected connectors of the first group of connectors, determining that no fault is located between the two interfaces having disconnected connectors of the first group of connectors and that a fault is located elsewhere in the arrangement.

According to yet another advantageous embodiment of the method according to the second aspect, two connectors of a second group of connectors of the two or more connectors of the interface are detachably connectable to one another so as to provide a signal connection between two signal wires of a second group of signal wires of the plurality of signal wires for providing a signal connection between two electrical units of the plurality of electrical units, wherein the method comprises:
- disconnecting the connectors of the second group of connectors of one of the two or more interfaces and disconnecting the connectors of the second group of connectors of another one of the two or more interfaces; and
- feeding one or more signals to one of the two or more interfaces having disconnected connectors of the second group of connectors, wherein the method further comprises:
- if no signal is detected at the other one of the two or more interfaces having disconnected connectors of the second group of connectors, determining that a fault is located between the two interfaces having disconnected connectors of the second group of connectors, or the method further comprises:
- if a signal is detected at the other one of the two or more interfaces having disconnected connectors of the second group of connectors, determining that no fault is located between the two interfaces having disconnected connectors of the second group of connectors and that a fault is located elsewhere in the arrangement.

According to a third aspect of the invention, the above mentioned and other objects are achieved with a vehicle arrangement, or an in-vehicle arrangement, comprising an arrangement according to any one of the embodiments disclosed above or below.

Advantages of the vehicle arrangement according to the third aspect and its embodiments correspond advantages of the arrangement according to the first aspect and its embodiments mentioned above or below.

According to a fourth aspect of the invention, the above mentioned and other objects are achieved with a vehicle comprising one or more arrangements according to any one of the embodiments disclosed above or below.

Advantages of the vehicle according to the fourth aspect and its embodiments correspond advantages of the arrangement according to the first aspect and its embodiments mentioned above or below.

The vehicle may be a wheeled vehicle, i.e. a vehicle having wheels. The vehicle may for example be a bus, a tractor vehicle, a heavy vehicle, a truck, or a car. The tractor vehicle, and/or the truck, may, or may be configured to, haul, or pull, a trailer. However, other types of vehicles are possible. The vehicle may be referred to as a motor vehicle. The vehicle may be an electric vehicle, EV, for example a hybrid vehicle or a hybrid electric vehicle, HEV, or a battery electric vehicle, BEV. Thus, a hybrid electric vehicle, HEV, and a battery electric vehicle, BEV, are versions, or examples, of an electric vehicle, EV. The EV may comprise one or more electric motors or electrical machines. The vehicle may comprise a combustion engine. For some embodiments, the vehicle may include only a combustion engine for the propulsion of the vehicle.

The vehicle may comprise a powertrain. The powertrain may be configured in accordance with any one of the embodiments disclosed above or below. The vehicle may comprise one or more of the group of: a combustion engine; an electric battery; and an electric battery pack. The powertrain of the vehicle may comprise one or more of the group of: a combustion engine; an electric battery; and an electric battery pack.

The above-mentioned features and embodiments of the arrangement, the method, the vehicle arrangement and the vehicle, respectively, may be combined in various possible ways providing further advantageous embodiments.

Further advantageous embodiments of the arrangement, the method, the vehicle arrangement and the vehicle according to the present invention and further advantages with the embodiments of the present invention emerge from the detailed description of embodiments.

### Brief Description of the Drawings

Embodiments of the invention will now be illustrated, for exemplary purposes, in more detail by way of embodiments and with reference to the enclosed drawings, where similar references are used for similar parts, in which:
- Figure 1: is a schematic diagram illustrating a conventional interconnection of electrical units of a daisy chain;
- Figure 2: is a schematic diagram illustrating another conventional interconnection of electrical units of a daisy chain;
- Figure 3: is a schematic diagram illustrating a first embodiment of the arrangement according to the first aspect of the invention;
- Figure 4: is a schematic diagram illustrating a second embodiment of the arrangement according to the first aspect of the invention;
- Figure 5: is a schematic diagram illustrating a third embodiment of the arrangement according to the first aspect of the invention;
- Figure 6: is a schematic diagram illustrating a fourth embodiment of the arrangement according to the first aspect of the invention;
- Figure 7: is a schematic diagram illustrating a fifth embodiment of the arrangement according to the first aspect of the invention;
- Figure 8: is a schematic front view of a first embodiment of the connector of embodiments of the arrangement according to the first aspect of the invention;
- Figure 9: is a schematic perspective view of a second embodiment of the connector of embodiments of the arrangement according to the first aspect of the invention;
- Figure 10: is a schematic front view of a third embodiment of the connector of embodiments of the arrangement according to the first aspect of the invention;
- Figure 11: is a schematic perspective view of a fourth embodiment of the connector of embodiments of the arrangement according to the first aspect of the invention;
- Figure 12: is a schematic perspective view of a fifth embodiment of the connector of embodiments of the arrangement according to the first aspect of the invention;
- Figure 13: is a schematic flow chart illustrating aspects of embodiments of the method according to the first aspect of the invention;
- Figure 14: is a schematic flow chart illustrating further aspects of embodiments of the method according to the first aspect of the invention;
- Figure 15: is a schematic flow chart illustrating further aspects of embodiments of the method according to the first aspect of the invention; and
- Figure 16: is a schematic side view of an embodiment of the vehicle according to the fourth aspect.

### Detailed Description

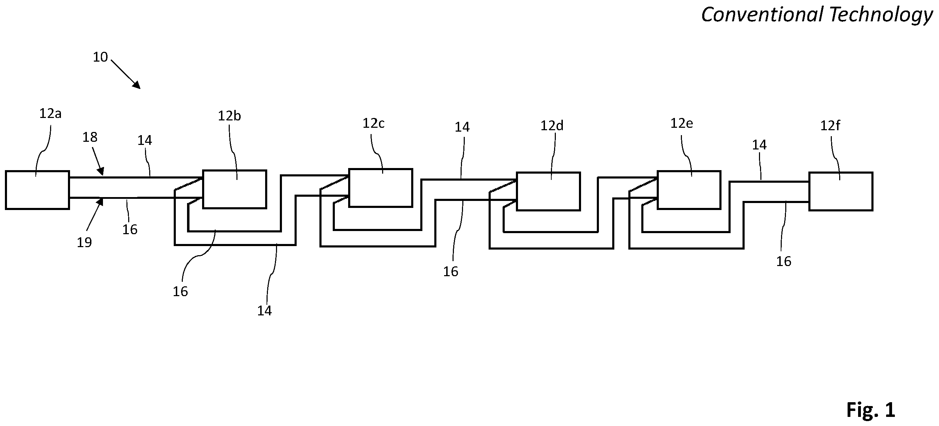

With reference to figure 1, a conventional daisy chain 10 including a plurality of electrical units 12a-f interconnected by way of signal wires 14, 16 to form the daisy chain 10 is illustrated. Each electrical unit 12a-f of the plurality of electrical units 12a-f may, for example, be in the form of an electric light or a control unit. Signal wires 14 of a first set of signal wires 14 may form a first signal line 18 for one or more first signals, while signal wires 16 of a second set of signals wires 16 may form a second signal line 19 for one or more second signals. At the electrical units 12b-e, two signal wires 14, 16 are double-crimped to form the daisy chain 10. Conventionally, the signal wires 14, 16 are included in one or more signal cables including a surrounding and electrically insulating outer sheath. Conventionally, the cross-section of the signal wire may vary and may, for example, be 0.5 mm², or 0.75 mm². Conventionally, the signal wire may be formed by one or more strands. Conventionally, a signal cable including two or more signal wires may have an electrically insulating outer sheath surrounding all signals wires, and the signal wires of the signal cable may have different cross-sections.

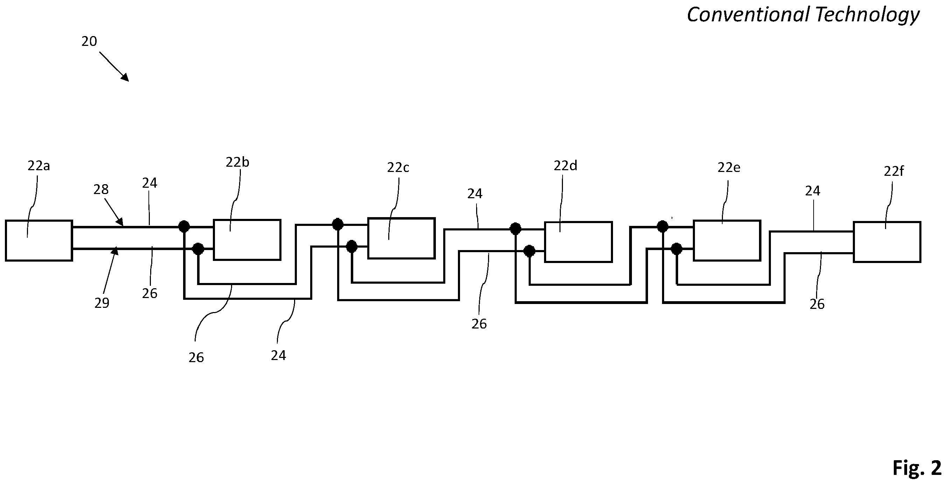

With reference to figure 2, another conventional daisy chain 20 including a plurality of electrical units 22a-f interconnected by way of signal wires 24, 26 to form the daisy chain 20 is illustrated. Signal wires 24 of a first set of signal wires 24 may form a first signal line 28 for one or more first signals, while signal wires 26 of a second set of signals wires 26 may form a second signal line 29 for one or more second signals. Between the electrical units 22a-f, every two signal wires 24, 26 are welded to one another, as indicated by black dots, for example ultrasonically welded together.

With reference to figures 1 and 2, the inventor of the present invention has found it to be difficult to detect a fault, for example a short-circuit, such as detect, or identify, the location of the fault, in faulty conventional daisy chains 10, 20 including a plurality of electric units 12a-f, 22a-f. For example, if there is a fault, such as short-circuit, somewhere in the conventional daisy chain 10, 20, and troubleshooting is performed to locate the fault, one or more signals may be sent from the first electrical unit 12a, 22a and no signal is detected at the last electrical unit 12f, 22f because of the fault. Herewith, it may be concluded or confirmed that there is a fault somewhere along the conventional daisy chain 10, 20, such as between the first and last electrical units 12a, 12f; 22a, 22f. However, it is not possible, or at least difficult, to locate the precise location of the fault in the conventional daisy chain 10, 20. Because of difficulties to disconnect double-crimped signal wires 14, 16 and welded signal wires 24, 26, in order to troubleshoot shorter sequences of the conventional daisy chain 10, 20, conventionally, signals wires 14, 16, 24, 26 are cut, and a separated sequence of the faulty conventional daisy chain 10, 20 resulting from the cutting of signals wires 14, 16, 24, 26 may be troubleshot individually. If no fault is detected in the separated sequence of the faulty conventional daisy chain 10, 20, conventionally, another sequence of the faulty conventional daisy chain 10, 20 is separated by cutting signals wires 14, 16, 24, 26 and troubleshot. However, the inventor of the present invention has found the cutting of signals wires 14, 16, 24, 26 for performing troubleshooting and detecting the fault to be difficult and time-consuming. Further, connecting the cut signals wires 14, 16, 24, 26 again when the troubleshooting is finished, and the fault is located, is also found to be time-consuming. One or more of these drawbacks is/are mitigated, or solved, by embodiments of the arrangement 100, 200, 300, 400, 500 according to the first aspect as disclosed hereinbelow.

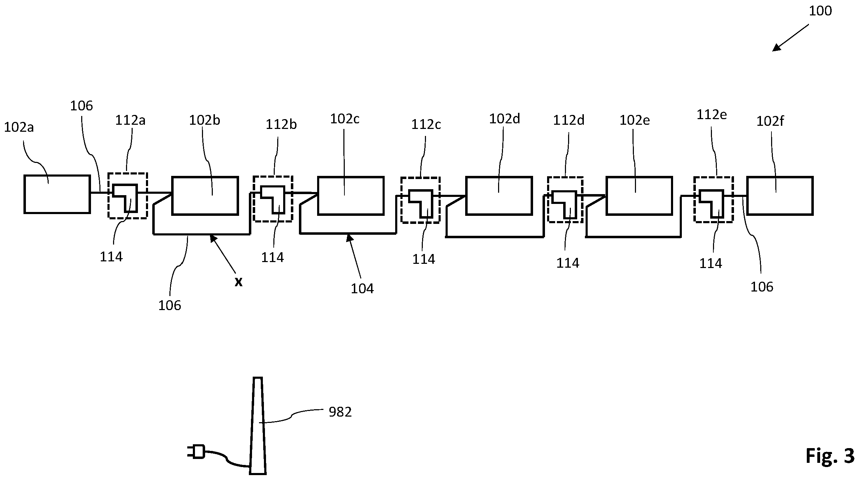

With reference to figure 3, a first embodiment of the arrangement 100 for signal transmission between a plurality of electrical units 102a-f of a daisy chain 104 according to the first aspect of the invention is schematically illustrated in the form of a circuit diagram. The arrangement 100 includes a plurality of electrical units 102a-f, i.e. two or more electrical units102a-f. For some embodiments, the arrangement 100 may include three, four, five, or six, electrical units102a-f, or more electrical units102a-f.

With reference to figure 3, each electrical unit 1 02a-f of the plurality of electrical units 102a-f may comprise any one of the group of:
- an electrical system, such as a control system, or a communication system, for example a message-based communication system, such as a controller area network, CAN, protocol communication system, a local interconnect network, LIN, communication system, or an Ethernet communication system;
- a control unit, for example an electronic control unit, ECU;
- a physical unit including one or more computer programs comprising instructions which, when the program is executed by a computer, cause the computer to carry out a method or one or more steps of a procedure or process;
- one or more computer-readable mediums comprising software and/or instructions which, when the instructions are executed by a computer, cause the computer to carry out a method or one or more steps of a procedure or process;
- an electrical apparatus or an electrical device;
- an electric light, for example a lamp;
- a loudspeaker;
- a fan;
- a sensor, for example a pressure sensor, a temperature sensor, a vibration sensor, a velocity sensor, a flow sensor, or a position sensor etc.; and
- an electric power source or an electrical energy source.

Other electrical units 102a-f in additional to the electrical units 102a-f mentioned above are also possible.

With reference to figure 3, the arrangement 100 includes one or more signal wires 106 for interconnecting the electrical units 102a-f of the plurality of electrical units 1 02a-f to form a daisy chain 104. For some embodiments, it may be defined that the one or more signal wires 106 interconnects/interconnect the electrical units 102a-f of the plurality of electrical units 102a-f to form the daisy chain 104. For some embodiments, the one or more signal wires 106 may electrically interconnect the electrical units 102a-f of the plurality of electrical units 102a-f, or the one or more signal wires 106 may signal-connect the electrical units 102a-f of the plurality of electrical units 102a-f to one another.

With reference to figure 3, the arrangement 100 includes one or more interfaces 112a-e for providing a signal connection between two electrical units 1 02a-f of the plurality of electrical units 102a-f. The interface 112a-e comprises one or more connectors 114. For some embodiments, the connector 114 may be referred to as a signal connector. The connector 114 is connected to a signal wire 106, such as to one or more signal wires 106, of the one or more signal wires 106. For some embodiments, it may be defined that the connector 114 is joined to the signal wire 106. For some embodiments, it may be defined that the connector 114 is signal-connected to the signal wire 106, or that the that the connector 114 is connected the signal wire 106 for signal transmission. Thus, it may be described that there is a signal connection between the connector 114 and the one or more signals wire 106 joined and/or connected to the connector 114.

With reference to figure 3, the interface 112a-e is external to, such as located outside, the electrical units 1 02a-f of the plurality of electrical units 102a-f. Since the interface 112a-e is external to electrical units 102a-f of the plurality of electrical units 102a-f, and the interface 112a-e includes the connector 114, it is implied that the connector 114 is external to, such as located outside, the electrical units 102a-f of the plurality of electrical units 102a-f. The connector 114 is connectable to a device 982 configured to monitor signal transmission, or signaling, between two electrical units 102a-f of the plurality of electrical units 102a-f. The device 982 may be described as an electrical device. Examples of devices 982, such as electrical devices, for monitoring signal transmission between two electrical units 102a-f are known to the person skilled in the art and are thus not disclosed in further detail herein.

With reference to figure 3, the connectors 114 and the signal wires 106 may be described to be part of, or represent, a signal line x, or signal path, which, for example, may transmit one or more signals, for example sensor signals, for example transmit one or more signals to or from the electrical unit 102a-f. Thus, for some embodiments, each electrical unit 102a-f of the plurality of electrical units 102a-f may comprise a sensor, or a detector.

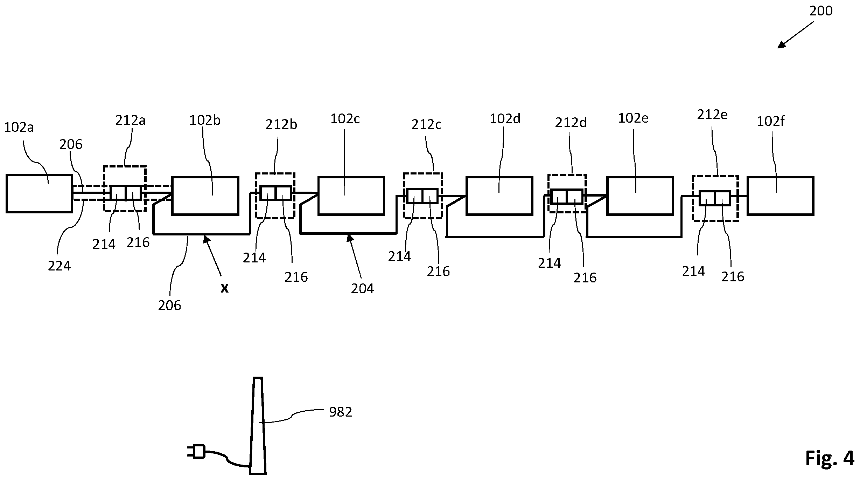

With reference to figure 4, a second embodiment of the arrangement 200 for signal transmission between a plurality of electrical units 102a-f of a daisy chain 204 according to the first aspect of the invention is schematically illustrated in the form of a circuit diagram. The arrangement 200 includes a plurality of electrical units 102a-f. The arrangement 200 includes a plurality of signal wires 206, i.e. two or more signal wires 206, for interconnecting the electrical units 102a-f of the plurality of electrical units 102a-f to form a daisy chain 204. Several features of the arrangement 200 of figure 4 may correspond to features of the arrangement 100 of figure 3 and are thus not described in further detail here to avoid repetition. The arrangement 200 of figure 4 differs from the arrangement 100 of figure 3 in that the interface 212a-e of the arrangement 200 of figure 4 includes two or more connectors 214, 216, wherein the connector 214, 216 is connected to one or more signal wires 206 of the plurality of signal wires 206. Further, the arrangement 200 of figure 4 differs from the arrangement 100 of figure 3 in that two connectors 214, 216 of the two or more connectors 214, 216 of the interface 212a-e, i.e. of the same interface 212a-e, are detachably connectable to one another so as to provide a signal connection between two signal wires 206 of the plurality of signal wires 206 for providing a signal connection between two electrical units 102a-f of the plurality of electrical units 102a-f. For some embodiments, it may be described that the two connectors 214, 216 of the two or more connectors 214, 216 of the interface 212a-e, i.e. of the same interface 212a-e, are mechanically detachably connectable to one another, for example detachably connectable in a mechanical sense, so as to provide a signal connection between two signal wires 206 of the plurality of signal wires 206 for providing the signal connection between two electrical units 102a-f of the plurality of electrical units 102a-f. The two connectors 214, 216 detachably connectable to one another may be described to be configured for detachable engagement. In this manner, detachable sequences of the daisy chain 204 are provided, which may be disconnected from the daisy chain 204 in an easy manner. Each detached and disconnected sequence of the daisy chain 204 may be individually troubleshot for detecting a fault, for example a short-circuit, and/or the remaining daisy chain 204 not including the detached and disconnected sequence may be troubleshot.

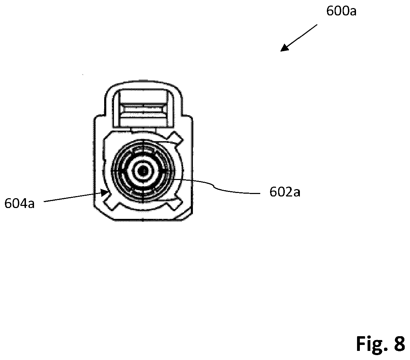

Embodiments of the connector 214, 216 are described in further detailed hereinbelow in connection with figures 8 to 12. With reference to figure 4, for some embodiments, the connector 214, 216 may include one or more wire-to-wire connector units. For some embodiments, it may be defined that the two connectors 214, 216 detachably connectable to one another so as to provide a signal connection between signal wires 206 of the plurality of signal wires 206 are directly detachably connectable to one another, such as directly mechanically detachably connectable to one another.

With reference to figure 4, the connectors 214, 216 and the signal wires 206 may be described to be part of, or represent, a signal line x, or signal path, which, for example, may transmit one or more signals, for example sensor signals. For some embodiments, the arrangement 200 may include a plurality of signal cables 224 (illustrated by dotted lines in figure 4), i.e. two or more signal cables 224, for interconnecting the electrical units 102a-f of the plurality of electrical units 102a-f to form the daisy chain 204. When the arrangement 200 includes the plurality of signal cables 224, each signal cable 224 of the plurality of signal cables 224 includes one or more signal wires 206 of the plurality of signal wires 206, and the connector 214, 216 is connected to one or more signal cables 224 of the plurality of signal cables 224. For some embodiments, the signal cable 224 may include an electrically insulating outer sheath surrounding the one or more signal wires 206 belonging to the signal cable 224. Otherwise, embodiments of the signal cable 224 may include one or more additional cable-related items or features. For some embodiments, the signal cable 224 may comprise an electrical cable. Although not illustrated, the embodiments disclosed below may also include a plurality of signal cables including one or more signal wires 306x, 306y, 506x, 506y, 506z of a plurality of signal wires 306x, 306y, 506x, 506y, 506z.

With reference to figures 3 and 4, for some embodiments, the one or more interfaces 112a-e, 212a-e may be configured to provide one or more signal connections between every two electrical units 102a-f of the plurality of electrical units 102a-f.

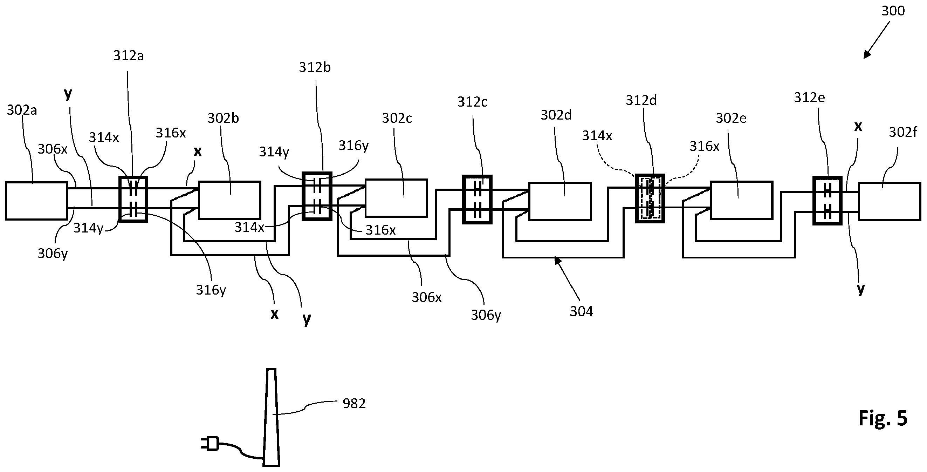

With reference to figure 5, a third embodiment of the arrangement 300 for signal transmission between a plurality of electrical units 302a-f of a daisy chain 304 according to the first aspect of the invention is schematically illustrated in the form of a circuit diagram. The arrangement 300 includes a plurality of electrical units 302a-f, for example of any one of the sorts mentioned above. The arrangement 300 includes a plurality of signal wires 306x, 306y for interconnecting the electrical units 302a-f of the plurality of electrical units 302a-f to form a daisy chain 304. Several features of the arrangement 300 of figure 5 may correspond to features of the arrangement 200 of figure 4 and are thus not described in further detail here to avoid repetition. The arrangement 300 of figure 5 differs from the arrangement 200 of figure 4 in that the daisy chain 304 comprises two signal lines *x, y,* or signal paths, which, for example, may transmit one or more signals. Thus, the arrangement 300 of figure 5 includes an additional signal line *y* compared to the arrangement 200 of figure 4.

With reference to figure 5, for some embodiments, it may be described that two connectors 314x, 316x of a first group of connectors 314x, 316x of the two or more connectors 314x, 316x, 314y, 316y of the interface 312a-e, i.e. the same interface 312a-e, are detachably connectable to one another so as to provide a signal connection between two signal wires 306x of a first group of signal wires 306x of the plurality of signal wires 306x, 306y for providing a signal connection between two electrical units 302a-f of the plurality of electrical units 302a-f. The first group of signal wires 306x may be part of, or represent, a first signal line *x,* which, for example, may transmit one or more first signals, for example an electric power signal, an electrical ground signal, or a communication signal.

Further, with reference to figure 5, for some embodiments, it may be defined that the two connectors 314x, 316x (illustrated by dotted lines in figure 5) of the first group of connectors 314x, 316x are detachably connectable to one another so as to provide a signal connection between two signal wires 306y of a second group of signal wires 306y of the plurality of signal wires 306x, 306y for providing a signal connection between two electrical units 302a-f of the plurality of electrical units 302a-f. The second group of signal wires 306y may be part of, or represent, a second signal line *y*, which, for example, may transmit one or more second signals, for example different from the one or more first signals, for example an electric power signal, an electrical ground signal, or a communication signal.

However, with reference to figure 5, for alternative embodiments, it may be defined that two connectors 314y, 316y of a second group of connectors 314y, 316y of the two or more connectors 314x, 316x, 314y, 316y of the interface 312a-e, i.e. the same interface 312a-e, are detachably connectable to one another so as to provide a signal connection between two signal wires 306y of the second group of signal wires 306y of the plurality of signal wires 306x, 306y for providing a signal connection between two electrical units 302a-f of the plurality of electrical units 302a-f. The second group of connectors 314y, 316y may be part of the second signal line *y*, which, for example, may transmit one or more second signals, for example different from the one or more first signals, for example an electric power signal, an electrical ground signal, or a communication signal.

With reference to figure 5, for some embodiments, one *x* of the first and second signal lines *x, y* may be configured to transmit one or more electric power signals while the other one *y* of the first and second signal lines *x, y* may be configured to transmit one or more electrical ground signals. Thus, for some embodiments, each one 302a-f of the electrical unit 302a-f of the plurality of electrical units 302a-f may comprise an electric light, or any other electrical unit 302a-f requiring electric power. For some embodiments, one or more electrical units 302a of the plurality of electrical units 302a-f may comprise an electric power source, for example any kind of electrical unit, circuit, apparatus, device, or system, producing or providing electrical energy, for example one or more of a group of: an electric battery; an electrical generator; an electric power converter, such as a DC-to-DC converter; and a fuel cell. However, other types of electric power sources, or electrical energy sources, are possible. The signal wire 306x, 306y may then comprise an electrical wire, or an electrical conductor, for example made of a metal or a metal alloy, such as copper. However, other materials of the signal wires 306x, 306y are possible. For some embodiments, the connector 314x, 316x may comprise an electrical connector.

With reference to figure 5, for some embodiments, the first and second signal lines x, *y* may be configured to transmit one or more communication signals, for example one or more message-based communication signals. Thus, for some embodiments, each one 302a-f of the electrical unit 302a-f of the plurality of electrical units 302a-f may comprise a communication unit or a control unit, for example an electronic control unit (ECU). The signal wire 306x, 306y may then comprise a fibre optic wire, or an electrical wire, or an electrical conductor, for example made of a metal or a metal alloy, such as copper. However, other materials of the signal wires 306x, 306y are possible.

With reference to figure 5, for some embodiments, the one or more interfaces 312a-e may be configured to provide one or more signal connections between every two electrical units 302a-f of the plurality of electrical units 302a-f. For other embodiments, the one or more interfaces may be configured to provide one or more signal connections between every three electrical units 302a-f, or between every four electrical units 302a-f, and so on, depending on the requirements.

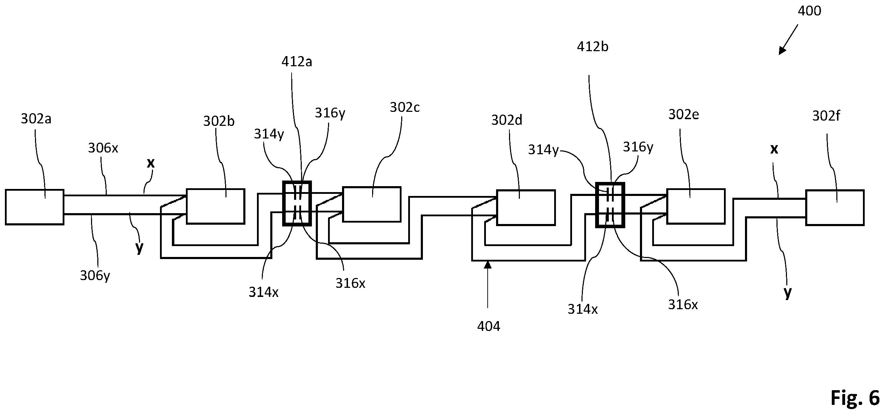

With reference to figure 6, a fourth embodiment of the arrangement 400 for signal transmission between a plurality of electrical units 302a-f of a daisy chain 404 according to the first aspect of the invention is schematically illustrated in the form of a circuit diagram. The arrangement 400 includes a plurality of electrical units 302a-f. The arrangement 300 includes a plurality of signal wires 306x, 306y for interconnecting the electrical units 302a-f of the plurality of electrical units 302a-f to form a daisy chain 404. Several features of the arrangement 400 of figure 6 may correspond to features of the arrangement 300 of figure 5 and are thus not described in further detail here to avoid repetition. The arrangement 400 of figure 6 differs from the arrangement 300 of figure 5 in that the one or more interfaces 412a-b is/are not configured to provide one or more signal connections between every two electrical units 302a-f of the plurality of electrical units 302a-f. Thus, an interface 412a-b is not connected between every two electrical units 302a-f, but two electrical units 302a-f of the plurality of electrical units 302a-f may be directly connected to one another without any intermediate interface 412a-b. In this manner, longer detachable sequences of the daisy chain 404 are provided.

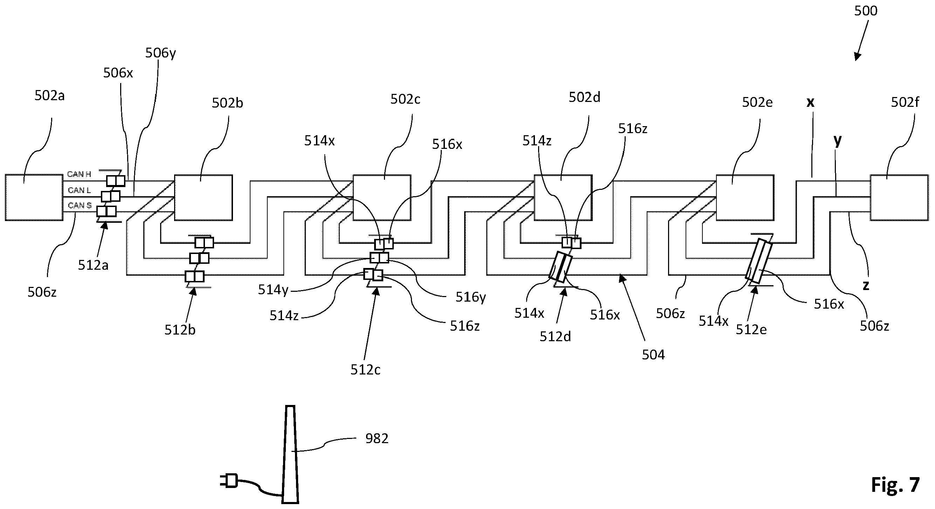

With reference to figure 7, a fifth embodiment of the arrangement 500 for signal transmission between a plurality of electrical units 502a-f of a daisy chain 504 according to the first aspect of the invention is schematically illustrated in the form of a circuit diagram. The arrangement 500 includes a plurality of electrical units 502a-f, for example of any one of the sorts mentioned above, such as a plurality of control units, for example a plurality of electronic control units (ECU). For some embodiments, each electrical unit 502a-f of the plurality of electrical units 502a-f may be configured for communication, for example message-based communication, and may be configured for communication with a controller area network, CAN, protocol communication system, a local interconnect network, LIN, communication system, or an Ethernet communication system. The arrangement 500 includes a plurality of signal wires 506x, 506y, 506z for interconnecting the electrical units 502a-f of the plurality of electrical units 502a-f to form a daisy chain 504. Several features of the arrangement 500 of figure 7 may correspond to features of the arrangement 300 of figure 5 and are thus not described in further detail here to avoid repetition. The arrangement 500 of figure 7 differs from the arrangement 300 of figure 5 in that the daisy chain 504 comprises three signal lines *x*, *y, z,* or signal paths, which, for example, may transmit one or more signals. Thus, the arrangement 500 of figure 7 includes an additional signal line *z* compared to the arrangement 300 of figure 5.

With reference to figure 7, in addition to the first and second groups of signal wires 506x, 506y, which are already discussed to some degree in connection with figure 5, for some embodiments, it may be defined that the two connectors 514x, 516x of the first group of connectors 514x, 516x of the two or more connectors 514x, 516x of the interface 512a-e are detachably connectable to one another so as to provide a signal connection between two signal wires 506z of a third group of signal wires 506z of the plurality of signal wires 506x, 506y, 506z for providing a signal connection between two electrical units 502a-f of the plurality of electrical units 502a-f. The third group of signal wires 506z may be part of, or represent, a third signal line z, which, for example, may transmit one or more first signals, for example different from the one or more first and second signals. For example, for some embodiments, when a controller area network, CAN, protocol communication system is involved, the first signal line *x* may be configured to transmit CAN-High (CAN H) via the first group of signal wires 506x, the second signal line *y* may be configured to transmit CAN-Low (CAN L) via the second group of signal wires 506y, and the third signal line *z* may be configured to transmit CAN-Shield (CAN S) via the third group of signal wires 506z. The signal wire 506x, 506y, 506z may comprise a fibre optic wire, or an electrical wire, or an electrical conductor, for example made of a metal or a metal alloy, such as copper. However, other materials of the signal wires 506x, 506y, 506z are possible.

However, with reference to figure 7, for alternative embodiments, it may be defined that two connectors 514z, 516z of a third group of connectors 514z, 516z of the two or more connectors 514x, 516x, 514y, 516y, 514z, 516z of the interface 512a-e, i.e. the same interface 512a-e, are detachably connectable to one another so as to provide a signal connection between two signal wires 506z of the third group of signal wires 506z of the plurality of signal wires 506x, 506y, 506z for providing a signal connection between two electrical units 502a-f of the plurality of electrical units 502a-f. The third group of connectors 514z, 516z may be part of the third signal line *z,* which, for example, may transmit one or more third signals, for example different from the one or more first and second signals.

With reference to figure 7, for some embodiments, the one or more interfaces 512a-e may be configured to provide one or more signal connections between every two electrical units 502a-f of the plurality of electrical units 502a-f. However, for alternative embodiments, this may not be the case.

With reference to figure 7, it is to be understood that, for some embodiments, one or more additional signal lines may be added and that additional signal wires associated with the one or more additional signal lines may be added. Thus, with reference to figures 3 to 7, embodiments of the arrangement may be provided with any number of signal lines depending on the requirements.

With reference to figure 8, a first embodiment of the connector 600a of embodiments of the arrangement 100, 200, 300, 400, 500 is schematically illustrated. The connector 600a illustrated in figure 8 may be referred to as a one-pole connector. The connector 600a is connected and adjoined to one signal wire 106, 206, 306x, 306y, 506x, 506y, 506z. The connector 600a may include one 602a of a female receptacle 602a, which may be configured for the connection to a male receptacle for providing a signal connection, and a male receptacle, which may be configured for the connection to a female receptacle for providing a signal connection. Thus, for some embodiments of the arrangement 100, 200, 300, 400, 500, the two connectors 600a detachably connectable to one another so as to provide a signal connection between signal wires 106, 206, 306x, 306y, 506x, 506y, 506z of the plurality of signal wires 106, 206, 306x, 306y, 506x, 506y, 506z may include one or more female receptacles 602a and one or more male receptacles. For some embodiments, the connector 600a may be described to include a wire-to-wire connector unit 604a.

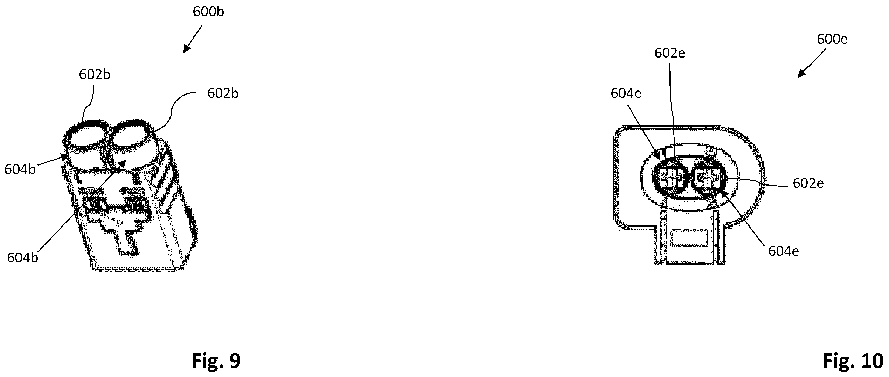

With reference to figures 9 and 10, a second embodiment of the connector 600b and a third embodiment of the connector 600e of embodiments of the arrangement 300, 400, 500 are schematically illustrated. The connector 600b, 600e illustrated in figures 9 and 10 may be referred to as a two-poles connector. The connector 600b, 600e is connected and adjoined to two signal wires 306x, 306y, 506x, 506y, 506z. The connector 600b, 600e may include one 602b, 602e or two 602b, 602e of a female receptacle 602e, which may be configured for the connection to a male receptacle for providing a signal connection, and a male receptacle 602b, which may be configured for the connection to a female receptacle for providing a signal connection. Thus, for some embodiments of the arrangement 100, 200, 300, 400, 500, the two connectors 600b, 600e detachably connectable to one another so as to provide a signal connection between signal wires 306x, 306y, 506x, 506y, 506z of the plurality of signal wires 306x, 306y, 506x, 506y, 506z may include one or more female receptacles 602e and one or more male receptacles 602b. For some embodiments, the connector 600b, 600e may be described to include two wire-to-wire connector units 604b, 604e.

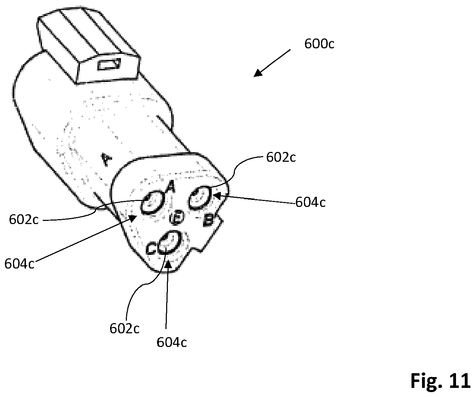

With reference to figure 11, a fourth embodiment of the connector 600c of an embodiment of the arrangement 500 is schematically illustrated. The connector 600c illustrated in figure 11 may be referred to as a three-poles connector. The connector 600c is connected and adjoined to three signal wires 506x, 506y, 506z. The connector 600c may include one 602c or more of a female receptacle 602c, which may be configured for the connection to a male receptacle for providing a signal connection, and a male receptacle, which may be configured for the connection to a female receptacle for providing a signal connection. For some embodiments, the connector 600c may be described to include three wire-to-wire connector units 604c.

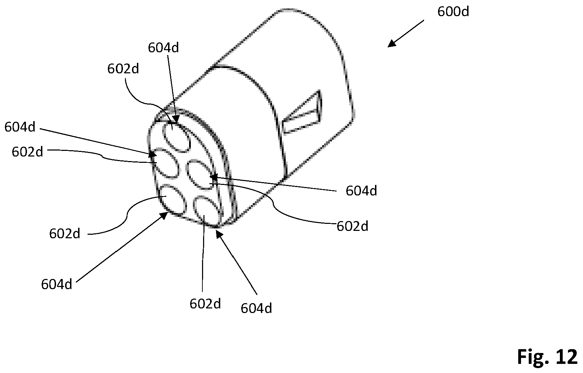

With reference to figure 12, a fifth embodiment of the connector 600d of an embodiment of the arrangement is schematically illustrated. The connector 600d illustrated in figure 12 may be referred to as a five-poles connector. The connector 600d is connected and adjoined to five signal wires. The connector 600d may include one 602d or more of a female receptacle 602d, which may be configured for the connection to a male receptacle for providing a signal connection, and a male receptacle, which may be configured for the connection to a female receptacle for providing a signal connection. For some embodiments, the connector 600d may be described to include five wire-to-wire connector units 604d.

It is to be understood that that each one 600a-e of the connectors 600a-e disclosed above may comprise one or more additional connector-related items or features. It is to be understood that other connectors, in addition to the connectors 600a-e illustrated in figures 8 to 12, are possible.

With reference to figures 3 to 12, for some embodiments, and as disclosed above, the signal wire 106, 206, 306x, 306y, 506x, 506y, 506z may be configured to transmit one or more signals comprising one or more of the group of:
- an electric power signal;
- an electrical ground signal;
- a communication system signal; and
- a message-based communication system signal.

With reference to the embodiments of connectors of figures 8 to 12 discussed above, and with reference to the arrangement 500 of figure 7, for each interface 512a-e, three sets of two one-pole connectors 600a may be provided for the three signal lines *x, y, z.* Alternatively, for each interface 512a-e, one set of two one-pole connectors 600a and one set of two two-poles connectors 600b, 600e may be provided for the three signal lines *x, y, z.* Alternatively, for each interface 512a-e, one set of two three-poles connectors 600c may be provided for the three signal lines *x*, *y, z.* For the alternatives with sets of two one-pole connectors 600a and a set of two two-poles connectors 600b, 600e, individual signal wires may be disconnected for troubleshooting and fault detection. With reference to the arrangement 200 of figure 4, for each interface 212a-e, one set of two one-pole connectors 600a may be provided for the signal line *x.* With reference to the arrangements 300, 400 of figures 5 and 6, for each interface 312a-e,412a-e, two sets of two one-pole connectors 600a, or one set of two two-poles connectors 600b, 600e, may be provided for the two signal lines *x, y.* However, it is be understood that each set of two connectors disclosed above may include both female and male receptacles. Different sets of two connectors may be applied in a corresponding manner for any number of signal lines. For example, for five signal lines, for each interface, one set of two five-poles connectors 600d may be used, however with both female and male receptacles, or one set of two three-poles connectors 600c combined with one set of two two-poles connectors 600b, 600e, or three sets of two one-pole connectors 600a combined with one set of two two-poles connectors 600b, 600e, or five sets of two one-pole connectors 600a etc. It is to be understood that several more combinations of sets of two connectors may be used depending on requirements and the number of signal lines.

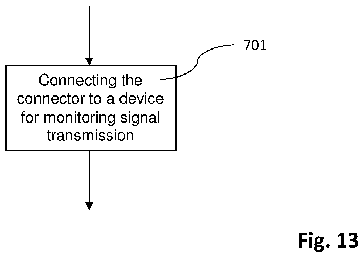

With reference to figure 13, aspects of embodiments of the method for a process of fault detection in an arrangement 100, 200, 300, 400, 500 comprising a plurality of electrical units 102a-f, 302a-f, 502a-f and one or more signal wires 106, 206, 306x, 306y, 506x, 506y, 506z interconnecting the electrical units 102a-f, 302a-f, 502a-f of the plurality of electrical units 102a-f, 302a-f, 502a-f to form a daisy chain 104, 204, 304, 404, 504 according to the second aspect of the invention are schematically illustrated in a flow chart. The plurality of electrical units 102a-f, 302a-f, 502a-f is daisy-chained by way of one or more interfaces 112a-e, 212a-e, 312a-e, 412a-b, 512a-e configured to provide a signal connection between two electrical units 102a-f, 302a-f, 502a-f of the plurality of electrical units 102a-f, 302a-f, 502a-f. The interface 112a-e, 212a-e, 312a-e, 412a-b, 512a-e may correspond to any one of the interfaces 112a-e, 212a-e, 312a-e, 412a-b, 512a-e disclosed above or below. Embodiments of the method include the step of connecting 701 the connector 114, 214, 216, 314x, 316x, 314y, 316y, 514x, 516x, 514y, 516y, 514z, 516z to a device 982 for monitoring signal transmission between two electrical units 102a-f, 302a-f, 502a-f of the plurality of electrical units 102a-f, 302a-f, 502a-f. Examples of devices 982 for monitoring signal transmission between two electrical units 102a-f, 302a-f, 502a-f are known to the person skilled in the art and are thus not disclosed in further detail herein.

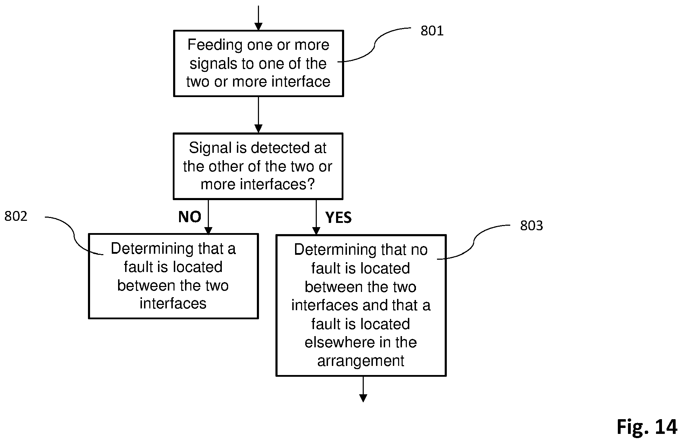

With reference to figure 14, further aspects of embodiments of the method according to the second aspect of the invention are schematically illustrated in a flow chart. For this embodiment, the plurality of electrical units 102a-f, 302a-f, 502a-f is daisy-chained by way of two or more interfaces 112a-e, 212a-e, 312a-e, 412a-b, 512a-e configured to provide a signal connection between two electrical units 102a-f, 302a-f, 502a-f of the plurality of electrical units 102a-f, 302a-f, 502a-f. The embodiment of the method of figure 14 includes:
- feeding 801 one or more signals to one 112a-e, 212a-e, 312a-e, 412a-b, 512a-e of the two or more interfaces 112a-e, 212a-e, 312a-e, 412a-b, 512a-e, wherein the method further comprises:
- if no signal is detected at the other one 112a-e, 212a-e, 312a-e, 412a-b, 512a-e of the two or more interfaces 112a-e, 212a-e, 312a-e, 412a-b, 512a-e by way of the device 982, determining 802 that a fault is located between the two interfaces 112a-e, 212a-e, 312a-e, 412a-b, 512a-e, or the method further comprises:
- if a signal is detected at the other one 112a-e, 212a-e, 312a-e, 412a-b, 512a-e of the two or more interfaces 112a-e, 212a-e, 312a-e, 412a-b, 512a-e by way of the device 982, determining 803 that no fault is located between the two interfaces 112a-e, 212a-e, 312a-e, 412a-b, 512a-e and that a fault is located elsewhere in the arrangement 100, 200, 300, 400, 500. Subsequently, the steps 801-803 of the method of figure 14 may be repeated for another sequence of the daisy chain 104, 204, 304, 404, 504.

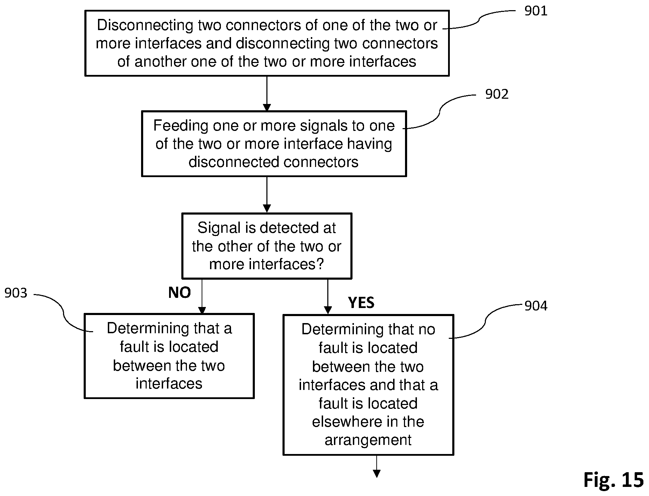

With reference to figure 15, further aspects of embodiments of the method according to the second aspect of the invention are schematically illustrated in a flow chart. For this embodiment, the arrangement 200, 300, 400, 500 comprises a plurality of signal wires 206, 306x, 306y, 506x, 506y, 506z interconnecting the electrical units 102a-f, 302a-f, 502a-f of the plurality of electrical units 102a-f, 302a-f, 502a-f to form a daisy chain 204, 304, 404, 504, wherein the interface 212a-e, 312a-e, 412a-b, 512a-e comprises two or more connectors 214, 216, 314x, 316x, 314y, 316y, 514x, 516x, 514y, 516y, 514z, 516z, wherein the connector 214, 216, 314x, 316x, 314y, 316y, 514x, 516x, 514y, 516y, 514z, 516z is connected to one or more signal wires 206, 306x, 306y, 506x, 506y, 506z of the plurality of signal wires 206, 306x, 306y, 506x, 506y, 506z, and wherein two connectors 214, 216, 314x, 316x, 314y, 316y, 514x, 516x, 514y, 516y, 514z, 516z of the two or more connectors 214, 216, 314x, 316x, 314y, 316y, 514x, 516x, 514y, 516y, 514z, 516z of the interface 212a-e, 312a-e, 412a-b, 512a-e, i.e. of the same interface 212a-e, 312a-e, 412a-b, 512a-e, are detachably connectable to one another so as to provide a signal connection between two signal wires 206, 306x, 306y, 506x, 506y, 506z of the plurality of signal wires 206, 306x, 306y, 506x, 506y, 506z for providing a signal connection between two electrical units 102a-f, 302a-f, 502a-f of the plurality of electrical units 102a-f, 302a-f, 502a-f. The embodiment of the method of figure 15 includes:
- disconnecting 901 two connectors 214, 216, 314x, 316x, 314y, 316y, 514x, 516x, 514y, 516y, 514z, 516z (for example, of one of the groups of connectors mentioned above) of one 212a-e, 312a-e, 412a-b, 512a-e of the two or more interfaces 212a-e, 312a-e, 412a-b, 512a-e and disconnecting two connectors 214, 216, 314x, 316x, 314y, 316y, 514x, 516x, 514y, 516y, 514z, 516z (for example, of same said group of connectors) of another one 212a-e, 312a-e, 412a-b, 512a-e of the two or more interfaces 212a-e, 312a-e, 412a-b, 512a-e; and
- feeding 902 one or more signals to one 212a-e, 312a-e, 412a-b, 512a-e of the two or more interfaces 212a-e, 312a-e, 412a-b, 512a-e having disconnected connectors 214, 216, 314x, 316x, 314y, 316y, 514x, 516x, 514y, 516y, 514z, 516z, wherein the method further comprises:
- if no signal is detected at the other one 212a-e, 312a-e, 412a-b, 512a-e of the two or more interfaces 212a-e, 312a-e, 412a-b, 512a-e having disconnected connectors 214, 216, 314x, 316x, 314y, 316y, 514x, 516x, 514y, 516y, 514z, 516z, determining 903 that a fault is located between the two interfaces 212a-e, 312a-e, 412a-b, 512a-e having disconnected connectors 214, 216, 314x, 316x, 314y, 316y, 514x, 516x, 514y, 516y, 514z, 516z, or the method further comprises:
- if a signal is detected at the other one 212a-e, 312a-e, 412a-b, 512a-e of the two or more interfaces 212a-e, 312a-e, 412a-b, 512a-e having disconnected connectors 214, 216, 314x, 316x, 314y, 316y, 514x, 516x, 514y, 516y, 514z, 516z, determining 904 that no fault is located between the two interfaces 212a-e, 312a-e, 412a-b, 512a-e having disconnected connectors 214, 216, 314x, 316x, 314y, 316y, 514x, 516x, 514y, 516y, 514z, 516z and that a fault is located elsewhere in the arrangement 200, 300, 400, 500. Subsequently, the steps 901-904 of the method of figure 15 may be repeated for another sequence of the daisy chain 204, 304, 404, 504.

Unless disclosed otherwise, it should be noted that the method steps illustrated in figures 13 to 15 and described herein do not necessarily have to be executed in the order illustrated in figures 13 to 15. The steps may essentially be executed in any suitable order. Further, one or more steps may be added without departing from the scope of the appended claims.

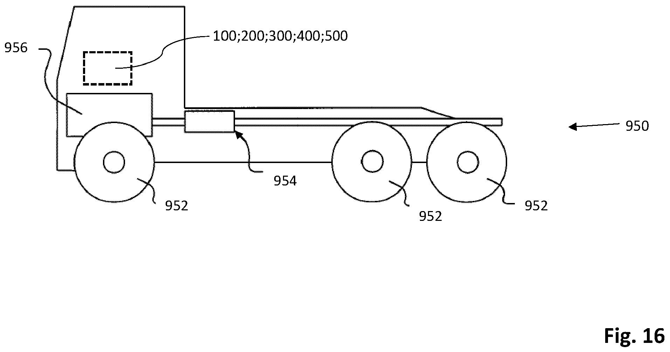

With reference to figure 16, an embodiment of the vehicle 950 according to the fourth aspect of the invention is schematically illustrated. The vehicle 900 includes one or more arrangements 100, 200, 300, 400, 500 according to any one of the embodiments disclosed above or below.

With reference to figure 16, the vehicle 950 is illustrated as a tractor vehicle. However, for other embodiments, the vehicle 950 may, for example, be a bus, a truck, a heavy truck, or a car. Other types of vehicles are also possible. The vehicle 950 may be an electric vehicle, EV, for example a hybrid vehicle or a hybrid electric vehicle, HEV, or a battery electric vehicle, BEV. The vehicle 950 may be an internal combustion engine, ICE, vehicle.

With reference to figure 16, the vehicle 950 may include wheels 952, for example six wheels 952. Only the wheels 952 on the left-hand side of the vehicle 950 are visible in figure 16. It is to be understood that the vehicle 950 may have fewer or more wheels than what is shown in figure 16. The vehicle 950 may comprise a powertrain 954, which may comprise a combustion engine 956, for example an internal combustion engine or any another combustion engine, and at least two driven wheels 952, or drive wheels 952, driven by the combustion engine 956. Alternatively, the vehicle may be an electric vehicle, EV. For example, in addition to the powertrain 954 comprising the combustion engine 956, the vehicle 950 may include one or more electrical machines and may thus be a so-called hybrid electric vehicle, HEV. Alternatively, the powertrain 954 comprising the combustion engine 956 may be replaced by an electrical powertrain including one or more electrical machines for driving the drive wheels 952, whereby the vehicle may be a battery electric vehicle, BEV.

It is to be understood that embodiments of the arrangement according to the first aspect and embodiments of the method according to the second aspect may be applied to configurations, structures, or apparatuses, different from a vehicle 950.

The present invention is not limited to the above-described embodiments. Instead, the present invention relates to, and encompasses all different embodiments being included within the scope of the independent claims.

## Claims

1. A vehicle arrangement (100; 200; 300; 400; 500) for signal transmission between a plurality of electrical units (102a-f) of a daisy chain (104), wherein the arrangement (100) comprises
a plurality of electrical units (102a-f),
a plurality of signal wires (106) for interconnecting the electrical units (102a-f) of the plurality of electrical units (102a-f) to form a daisy chain (104), and
one or more interfaces (112a-e) for providing a signal connection between two electrical units (102a-f) of the plurality of electrical units (102a-f),
wherein the one or more interfaces (112a-e) comprise two or more connectors (114),
wherein the two or more connectors (114) are connected to a signal wire (106) of the one or more signal wires (106),
wherein the one or more interfaces (112a-e) are external to the electrical units (102a-f) of the plurality of electrical units (102a-f), and
wherein the two or more connectors (114) are connectable to a device (982) configured to monitor signal transmission between two electrical units (102a-f) of the plurality of electrical units (102a-f), and wherein two connectors (214, 216) of the two or more connectors (214, 216) of the interface (212a-e) are detachably connectable to one another so as to provide a signal connection between two signal wires (206) of the plurality of signal wires (206) for providing a signal connection between two electrical units (102a-f) of the plurality of electrical units (102a-f).

2. An arrangement (200; 300; 400; 500) according to claim 1, wherein two connectors (314x, 316x) of a first group of connectors (314x, 316x) of the two or more connectors (314x, 316x, 314y, 316y) of the interface (312a-e) are detachably connectable to one another so as to provide a signal connection between two signal wires (306x) of a first group of signal wires (306x) of the plurality of signal wires (306x, 306y) for providing a signal connection between two electrical units (302a-f) of the plurality of electrical units (302a-f).

3. An arrangement (300; 400; 500) according to claim 1 or 2, wherein the two connectors (314x, 316x) of the first group of connectors (314x, 316x) are detachably connectable to one another so as to provide a signal connection between two signal wires (306y) of a second group of signal wires (306y) of the plurality of signal wires (306x, 506y) for providing a signal connection between two electrical units (302a-f) of the plurality of electrical units (302a-f).

4. An arrangement (300; 400; 500) according to claim 2 or 3, wherein two connectors (314y, 316y) of a second group of connectors (314y, 316y) of the two or more connectors (314x, 316x, 314y, 316y) of the interface (312a-e) are detachably connectable to one another so as to provide a signal connection between two signal wires (306y) of a second group of signal wires (306y) of the plurality of signal wires (306x, 306y) for providing a signal connection between two electrical units (302a-f) of the plurality of electrical units (302a-f).

5. An arrangement (200; 300; 400; 500) according to any one of the preceding claims, wherein the two connectors (214, 216) detachably connectable to one another so as to provide a signal connection between signal wires (206) of the plurality of signal wires (206) are directly detachably connectable to one another.

6. An arrangement (200; 300; 400; 500) according to any one of the preceding claims, wherein the arrangement (200; 300; 400; 500) comprises a plurality of signal cables (224) for interconnecting the electrical units (102a-f) of the plurality of electrical units 102a-f to form the daisy chain (204),
wherein each signal cable (224) of the plurality of signal cables (224) comprises one or more signal wires (206) of the plurality of signal wires (206), and
wherein the two or more connectors (214, 216) are connected to one or more signal cables (224) of the plurality of signal cables (224).

7. An arrangement (200; 300; 400; 500) according to any one of the preceding claims, wherein the one or more connectors (600a-e) comprise one or more wire-to-wire connector units (604a-e).

8. An arrangement (100; 200; 300; 500) according to any one of the preceding claims, wherein the one or more interfaces (112a-e) is/are configured to provide one or more signal connections between every two electrical units (102a-f) of the plurality of electrical units (102a-f).

9. An arrangement (100; 200; 300; 400; 500) according to any one of the preceding claims, wherein the arrangement (100) comprises three or more electrical units (102a-f) included in the plurality of electrical units (102a-f).

10. An arrangement (100; 200; 300; 400; 500) according to any one of the preceding claims, wherein the signal wire (106; 206; 306x, 306y; 506x, 506y, 506z) is configured to transmit one or more signals comprising one or more of the group of:
• an electric power signal;
• an electrical ground signal;
• a communication system signal; and
• a message-based communication system signal.

11. A method for a process of fault detection in a vehicle arrangement comprising a plurality of electrical units and a plurality of signal wires interconnecting the electrical units of the plurality of electrical units to form a daisy chain,
wherein the plurality of electrical units is daisy-chained by way of one or more interfaces configured to provide a signal connection between two electrical units of the plurality of electrical units,
wherein the one or more interfaces comprise two or more connectors,
wherein the two or more connectors are connected one or more signal wires of the plurality of signal wires,
wherein the one or more interfaces are external to the electrical units of the plurality of electrical units, ,
wherein two connectors of the two or more connectors of the interface are detachably connectable to one another so as to provide a signal connection between two signal wires of the plurality of signal wires for providing a signal connection between two electrical units of the plurality of electrical units, wherein the method comprises:
• connecting (701) the one or more connectors to a device for monitoring signal transmission between two electrical units of the plurality of electrical units,
• disconnecting (901) two connectors of one of the two or more interfaces and disconnecting two connectors of another one of the two or more interfaces; and
• feeding (902) one or more signals to one of the two or more interfaces having disconnected connectors, wherein the method further comprises:
• if no signal is detected at the other one of the two or more interfaces having disconnected connectors, determining (903) that a fault is located between the two interfaces having disconnected connectors, or the method further comprises:
• if a signal is detected at the other one of the two or more interfaces having disconnected connectors, determining (904) that no fault is located between the two interfaces having disconnected connectors and that a fault is located elsewhere in the arrangement.

12. A method according to claim 11, wherein the plurality of electrical units is daisy-chained by way of two or more interfaces configured to provide a signal connection between two electrical units of the plurality of electrical units, wherein the method comprises:
• feeding (801) one or more signals to one of the two or more interfaces, wherein the method further comprises:
• if no signal is detected at the other one of the two or more interfaces by way of the device, determining (802) that a fault is located between the two interfaces, or the method further comprises:
• if a signal is detected at the other one of the two or more interfaces by way of the device, determining (803) that no fault is located between the two interfaces and that a fault is located elsewhere in the arrangement.

13. A vehicle (950) comprising one or more arrangements (100; 200; 300; 400; 500) according to any one of the claims 1 to 10.

## Patentansprüche

1. Fahrzeuganordnung (100; 200; 300; 400; 500) zur Signalübertragung zwischen einer Mehrzahl von elektrischen Einheiten (102a-f) einer Daisy Chain (104), wobei die Anordnung (100) umfasst
eine Mehrzahl von elektrischen Einheiten (102a-f),
eine Mehrzahl von Signaldrähten (106) zum Verbinden der elektrischen Einheiten (102a-f) der Mehrzahl von elektrischen Einheiten (102a-f) untereinander, um eine Daisy Chain (104) zu bilden, und
eine oder mehrere Schnittstellen (112a-e) zum Bereitstellen einer Signalverbindung zwischen zwei elektrischen Einheiten (102a-f) aus der Mehrzahl der elektrischen Einheiten (102a-f),
wobei die eine oder mehreren Schnittstellen (112a-e) zwei oder mehr Konnektoren (114) umfassen,
wobei die zwei oder mehr Konnektoren (114) mit einem Signaldraht (106) des einen oder der mehreren Signaldrähte (106) verbunden sind,
wobei die eine oder mehreren Schnittstellen (112a-e) außerhalb der elektrischen Einheiten (102a-f) der Mehrzahl von elektrischen Einheiten (102a-f) liegen, und
wobei die zwei oder mehr Konnektoren (114) mit einer Vorrichtung (982) verbunden werden können, die konfiguriert ist, um eine Signalübertragung zwischen zwei elektrischen Einheiten (102a-f) aus der Mehrzahl von elektrischen Einheiten (102a-f) zu überwachen, und wobei zwei Konnektoren (214, 216) der beiden oder mehreren Konnektoren (214, 216) der Schnittstelle (212a-e) abnehmbar miteinander verbunden werden können, um eine Signalverbindung zwischen zwei Signaldrähten (206) aus der Mehrzahl von Signaldrähten (206) zum Bereitstellen einer Signalverbindung zwischen zwei elektrischen Einheiten (102a-f) aus der Mehrzahl von elektrischen Einheiten (102a-f) bereitzustellen.

2. Anordnung (200; 300; 400; 500) nach Anspruch 1, wobei zwei Konnektoren (314x, 316x) einer ersten Gruppe von Konnektoren (314x, 316x) der zwei oder mehr Konnektoren (314x, 316x, 314y, 316y) der Schnittstelle (312a-e) abnehmbar miteinander verbunden werden können, um eine Signalverbindung zwischen zwei Signaldrähten (306x) einer ersten Gruppe von Signaldrähten (306x) aus der Mehrzahl von Signaldrähten (306x, 306y) zum Bereitstellen einer Signalverbindung zwischen zwei elektrischen Einheiten (302a-f) aus der Mehrzahl von elektrischen Einheiten (302a-f) bereitzustellen.

3. Anordnung (300; 400; 500) nach Anspruch 1 oder 2, wobei die beiden Konnektoren (314x, 316x) der ersten Gruppe von Konnektoren (314x, 316x) abnehmbar miteinander verbunden werden können, um eine Signalverbindung zwischen zwei Signaldrähten (306y) einer zweiten Gruppe von Signaldrähten (306y) aus der Mehrzahl von Signaldrähten (306x, 506y) zum Bereitstellen einer Signalverbindung zwischen zwei elektrischen Einheiten (302a-f) aus der Mehrzahl von elektrischen Einheiten (302a-f) bereitzustellen.

4. Anordnung (300; 400; 500) nach Anspruch 2 oder 3, wobei zwei Konnektoren (314y, 316y) einer zweiten Gruppe von Konnektoren (314y, 316y) der beiden oder mehreren Konnektoren (314x, 316x, 314y, 316y) der Schnittstelle (312a-e) abnehmbar miteinander verbunden werden können, um eine Signalverbindung zwischen zwei Signaldrähten (306y) einer zweiten Gruppe von Signaldrähten (306y) aus der Mehrzahl von Signaldrähten (306x, 306y) zum Bereitstellen einer Signalverbindung zwischen zwei elektrischen Einheiten (302a-f) aus der Mehrzahl von elektrischen Einheiten (302a-f) bereitzustellen.

5. Anordnung (200; 300; 400; 500) nach einem der vorhergehenden Ansprüche, wobei die beiden Konnektoren (214, 216), die abnehmbar miteinander verbunden werden können, um eine Signalverbindung zwischen den Signaldrähten (206) aus der Mehrzahl von Signaldrähten (206) bereitzustellen, direkt abnehmbar miteinander verbunden werden können.

6. Anordnung (200; 300; 400; 500) nach einem der vorhergehenden Ansprüche, wobei die Anordnung (200; 300; 400; 500) eine Mehrzahl von Signalkabeln (224) zum Verbinden der elektrischen Einheiten (102a-f) der Mehrzahl von elektrischen Einheiten 102a-f untereinander umfasst, um die Daisy Chain (204) zu bilden,
wobei jedes Signalkabel (224) aus der Mehrzahl von Signalkabeln (224) einen oder mehrere Signaldrähte (206) aus der Mehrzahl von Signaldrähten (206) umfasst, und
wobei die zwei oder mehr Konnektoren (214, 216) mit einem oder mehreren Signalkabeln (224) aus der Mehrzahl von Signalkabeln (224) verbunden sind.

7. Anordnung (200; 300; 400; 500) nach einem der vorhergehenden Ansprüche, wobei der eine oder die mehreren Konnektoren (600a-e) einen oder mehrere Drahtzu-Draht-Konnektoreinheiten (604a-e) umfassen.

8. Anordnung (100; 200; 300; 500) nach einem der vorhergehenden Ansprüche, wobei die eine oder mehreren Schnittstellen (112a-e) so konfiguriert ist/sind, um eine oder mehrere Signalverbindungen zwischen jeweils zwei elektrischen Einheiten (102a-f) aus der Mehrzahl von elektrischen Einheiten (102a-f) bereitzustellen.

9. Anordnung (100; 200; 300; 400; 500) nach einem der vorhergehenden Ansprüche, wobei die Anordnung (100) drei oder mehr elektrische Einheiten (102a-f) umfasst, die in der Mehrzahl von elektrischen Einheiten (102a-f) enthalten sind.

10. Anordnung (100; 200; 300; 400; 500) nach einem der vorhergehenden Ansprüche, wobei der Signaldraht (106; 206; 306x, 306y; 506x, 506y, 506z) konfiguriert ist, um ein oder mehrere Signale zu übertragen, die eines oder mehrere aus der Gruppe umfassen von:
• einem elektrischen Leistungssignal;
• einem elektrischen Erdungssignal;
• einem Kommunikationssystemsignal; und
• einem nachrichtenbasierten Kommunikationssystemsignal.

11. Verfahren für einen Prozess einer Fehlererkennung in einer Fahrzeuganordnung umfassend eine Mehrzahl von elektrischen Einheiten und eine Mehrzahl von Signaldrähten, die die elektrischen Einheiten der Mehrzahl von elektrischen Einheiten untereinander verbinden, um eine Daisy Chain zu bilden,
wobei die Mehrzahl von elektrischen Einheiten in einer Daisy Chain-weise miteinander verbunden sind über eine oder mehrere Schnittstellen, die konfiguriert sind, um eine Signalverbindung zwischen zwei elektrischen Einheiten aus der Mehrzahl von elektrischen Einheiten bereitzustellen,
wobei die eine oder mehreren Schnittstellen zwei oder mehr Konnektoren umfassen,
wobei die zwei oder mehr Konnektoren mit einem oder mehreren Signaldrähten aus der Mehrzahl von Signaldrähten verbunden sind,
wobei die eine oder mehreren Schnittstellen außerhalb der elektrischen Einheiten der Mehrzahl von elektrischen Einheiten liegen,
wobei zwei Konnektoren der zwei oder mehr Konnektoren der Schnittstelle abnehmbar miteinander verbunden werden können, um eine Signalverbindung zwischen zwei Signaldrähten aus der Mehrzahl von Signaldrähten zum Bereitstellen einer Signalverbindung zwischen zwei elektrischen Einheiten aus der Mehrzahl von elektrischen Einheiten bereitzustellen, wobei das Verfahren umfasst:
• Verbinden (701) des einen oder der mehreren Konnektoren mit einer Vorrichtung zum Überwachen einer Signalübertragung zwischen zwei elektrischen Einheiten aus der Mehrzahl von elektrischen Einheiten,
• Trennen (901) von zwei Konnektoren einer der zwei oder mehr Schnittstellen und Trennen von zwei Konnektoren einer anderen der zwei oder mehr Schnittstellen; und
• Einspeisen (902) eines oder mehrerer Signale in eine der zwei oder mehr Schnittstellen mit getrennten Konnektoren, wobei das Verfahren ferner umfasst:
• wenn an der anderen der zwei oder mehr Schnittstellen mit getrennten Konnektoren kein Signal erkannt wird, Bestimmen (903), dass ein Fehler zwischen den zwei Schnittstellen mit getrennten Konnektoren liegt, oder wobei das Verfahren ferner umfasst:
• wenn ein Signal an der anderen der zwei oder mehr Schnittstellen mit getrennten Konnektoren erkannt wird, Bestimmen (904), dass kein Fehler zwischen den zwei Schnittstellen mit getrennten Konnektoren liegt und dass ein Fehler an anderer Stelle in der Anordnung liegt.

12. Verfahren nach Anspruch 11, wobei die Mehrzahl von elektrischen Einheiten in einer Daisy Chain-weise miteinander verbunden sind über zwei oder mehr Schnittstellen, die konfiguriert sind, um eine Signalverbindung zwischen zwei elektrischen Einheiten aus der Mehrzahl von elektrischen Einheiten bereitzustellen, wobei das Verfahren umfasst:
• Einspeisen (801) eines oder mehrerer Signale in eine der zwei oder mehr Schnittstellen, wobei das Verfahren ferner umfasst:
• wenn an der anderen der zwei oder mehr Schnittstellen kein Signal über die Vorrichtung erkannt wird, Bestimmen (802), dass ein Fehler zwischen den beiden Schnittstellen liegt, oder wobei das Verfahren ferner umfasst:
• wenn an der anderen der zwei oder mehr Schnittstellen ein Signal über die Vorrichtung erkannt wird, Bestimmen (803), dass zwischen den beiden Schnittstellen kein Fehler liegt und dass ein Fehler an einer anderen Stelle in der Anordnung liegt.

13. Fahrzeug (950) mit einer oder mehreren Anordnungen (100; 200; 300; 400; 500) nach einem der Ansprüche 1 bis 10.

## Revendications

1. Agencement de véhicule (100 ; 200 ; 300 ; 400 ; 500) destiné à la transmission de signaux entre une pluralité d'unités électriques (102a-f) d'une guirlande (104), dans lequel l'agencement (100) comprend
une pluralité d'unités électriques (102a-f),
une pluralité de fils de signal (106) pour interconnecter les unités électriques (102a-f) de la pluralité d'unités électriques (102a-f) pour former une guirlande (104), et
une ou plusieurs interfaces (112a-e) pour fournir une connexion de signal entre deux unités électriques (102a-f) de la pluralité d'unités électriques (102a-f),
dans lequel les une ou plusieurs interfaces (112a-e) comprennent deux connecteurs (114) ou plus,
dans lequel les deux connecteurs (114) ou plus sont connectés à un fil de signal (106) des un ou plusieurs fils de signal (106),
dans lequel les une ou plusieurs interfaces (112a-e) sont externes aux unités électriques (102a-f) de la pluralité d'unités électriques (102a-f), et
dans lequel les deux connecteurs (114) ou plus peuvent être connectés à un dispositif (982) configuré pour surveiller la transmission de signal entre deux unités électriques (102a-f) de la pluralité d'unités électriques (102a-f), et dans lequel deux connecteurs (214, 216) des deux connecteurs (214, 216) ou plus de l'interface (212a-e) peuvent être connectés de manière amovible l'un à l'autre de manière à fournir une connexion de signal entre deux fils de signal (206) de la pluralité de fils de signal (206) afin de fournir une connexion de signal entre deux unités électriques (102a-f) de la pluralité d'unités électriques (102a-f).

2. Agencement (200 ; 300 ; 400 ; 500) selon la revendication 1, dans lequel deux connecteurs (314x, 316x) d'un premier groupe de connecteurs (314x, 316x) parmi les deux connecteurs (314x, 316x, 314y, 316y) ou plus de l'interface (312a-e) peuvent être connectés de manière amovible l'un à l'autre de manière à fournir une connexion de signal entre deux fils de signal (306x) d'un premier groupe de fils de signal (306x) de la pluralité de fils de signal (306x, 306y) pour fournir une connexion de signal entre deux unités électriques (302a-f) de la pluralité d'unités électriques (302a-f).

3. Agencement (300 ; 400 ; 500) selon la revendication 1 ou 2, dans lequel les deux connecteurs (314x, 316x) du premier groupe de connecteurs (314x, 316x) peuvent être connectés de manière amovible l'un à l'autre de manière à fournir une connexion de signal entre deux fils de signal (306y) d'un deuxième groupe de fils de signal (306y) de la pluralité de fils de signal (306x, 506y) pour fournir une connexion de signal entre deux unités électriques (302a-f) de la pluralité d'unités de signal (302a-f).

4. Agencement (300 ; 400 ; 500) selon la revendication 2 ou 3, dans lequel deux connecteurs (314y, 316y) d'un deuxième groupe de connecteurs (314y, 316y) parmi les deux connecteurs (314x, 316x, 314y, 316y) ou plus de l'interface (312a-e) peuvent être connectés de manière amovible l'un à l'autre de manière à fournir une connexion de signal entre deux fils de signal (306y) d'un deuxième groupe de fils de signal (306y) de la pluralité de fils de signal (306x, 306y) pour fournir une connexion de signal entre deux unités électriques (302a-f) de la pluralité d'unités électriques (302a-f) .

5. Agencement (200 ; 300 ; 400 ; 500) selon l'une quelconque des revendications précédentes, dans lequel les deux connecteurs (214, 216) pouvant être connectés de manière amovible l'un à l'autre de manière à fournir une connexion de signal entre des fils de signal (206) de la pluralité de fils de signal (206) peuvent être directement connectés de manière amovible l'un à l'autre.

6. Agencement (200 ; 300 ; 400 ; 500) selon l'une quelconque des revendications précédentes, dans lequel l'agencement (200 ; 300 ; 400 ; 500) comprend une pluralité de câbles de signal (224) pour interconnecter les unités électriques (102a-f) de la pluralité d'unités électriques 102a-f afin de former la guirlande (204),
dans lequel chaque câble de signal (224) de la pluralité de câbles de signal (224) comprend un ou plusieurs fils de signal (206) de la pluralité de fils de signal (206), et
dans lequel les deux connecteurs (214, 216) ou plus sont connectés à un ou plusieurs câbles de signal (224) de la pluralité de câbles de signal (224).

7. Agencement (200 ; 300 ; 400 ; 500) selon l'une quelconque des revendications précédentes, dans lequel les un ou plusieurs connecteurs (600a-e) comprennent une ou plusieurs unités de connecteurs de fil à fil (604a-e).

8. Agencement (100 ; 200 ; 300 ; 500) selon l'une quelconque des revendications précédentes, dans lequel les une ou plusieurs interfaces (112a-e) sont configurées pour fournir une ou plusieurs connexions de signal entre chaque paire d'unités électriques (102a-f) de la pluralité d'unités électriques (102a-f).

9. Agencement (100 ; 200 ; 300 ; 400 ; 500) selon l'une quelconque des revendications précédentes, dans lequel l'agencement (100) comprend trois unités électriques (102a-f) ou plus incluses dans la pluralité d'unités électriques (102a-f).

10. Agencement (100 ; 200 ; 300 ; 400 ; 500) selon l'une quelconque des revendications précédentes, dans lequel le fil de signal (106 ; 206 ; 306x, 306y ; 506x, 506y, 506z) est configuré pour transmettre un ou plusieurs signaux comprenant un ou plusieurs parmi le groupe suivant :
• un signal d'alimentation électrique ;
• un signal électrique de masse ;
• un signal de système de communication ; et
• un signal de système de communication basé sur des messages.

11. Procédé pour un processus de détection de pannes dans un agencement de véhicule comprenant une pluralité d'unités électriques et une pluralité de fils de signal interconnectant les unités électriques de la pluralité d'unités électriques afin de former une guirlande,
dans lequel la pluralité d'unités électriques est en guirlande au moyen d'une ou de plusieurs interfaces configurées pour fournir une connexion de signal entre deux unités électriques de la pluralité d'unités électriques,
dans lequel les une ou plusieurs interfaces comprennent deux connecteurs ou plus,
dans lequel les deux connecteurs ou plus sont connectés à un ou plusieurs fils de signal de la pluralité de fils de signal,
dans lequel les une ou plusieurs interfaces sont externes aux unités électriques de la pluralité d'unités électriques,
dans lequel deux connecteurs parmi les deux connecteurs ou plus de l'interface peuvent être connectés de manière amovible l'un à l'autre de manière à fournir une connexion de signal entre deux fils de signal de la pluralité de fils de signal pour fournir une connexion de signal entre deux unités électriques de la pluralité d'unités électriques, dans lequel le procédé comprend :
• la connexion (701) des un ou plusieurs connecteurs à un dispositif pour surveiller la transmission de signal entre deux unités électriques de la pluralité d'unités électriques,
• la déconnexion (901) de deux connecteurs de l'une des deux interfaces ou plus et la déconnexion de deux connecteurs d'une autre des deux interfaces ou plus ; et
• l'apport (902) d'un ou plusieurs signaux à l'une des deux interfaces ou plus ayant des connecteurs déconnectés, dans lequel le procédé comprend en outre :
• si aucun signal n'est détecté au niveau de l'autre des deux interfaces ou plus ayant des connecteurs déconnectés, la détermination (903) du fait qu'une panne est localisée entre les deux interfaces ayant des connecteurs déconnectés, ou le procédé comprend en outre :
• si un signal est détecté au niveau de l'autre des deux interfaces ou plus ayant des connecteurs déconnectés, la détermination (904) du fait qu'aucune panne n'est localisée entre les deux interfaces ayant des connecteurs déconnectés et qu'une panne est localisée ailleurs dans l'agencement.

12. Procédé selon la revendication 11, dans lequel la pluralité d'unités électriques est en guirlande au moyen de deux interfaces ou plus configurées pour fournir une connexion de signal entre deux unités électriques de la pluralité d'unités électriques, dans lequel le procédé comprend :
• l'apport (801) d'un ou plusieurs signaux à l'une des deux interfaces ou plus, dans lequel le procédé comprend en outre :
• si aucun signal n'est détecté au niveau de l'autre des deux interfaces ou plus au moyen du dispositif, la détermination (802) du fait qu'une panne est localisée entre les deux interfaces, ou le procédé comprend en outre :
• si un signal est détecté au niveau de l'autre des deux interfaces ou plus au moyen du dispositif, la détermination (803) du fait qu'aucune panne n'est localisée entre les deux interfaces et qu'une panne est localisée ailleurs dans l'agencement.

13. Véhicule (950) comprenant un ou plusieurs agencements (100 ; 200 ; 300 ; 400 ; 500) selon l'une quelconque des revendications 1 à 10.
